# EUROPÄISCHE PATENTSCHRIFT

(11) **EP 1 618 494 B1**
(45) Veröffentlichungstag und Bekanntmachung des Hinweises auf die Patenterteilung: **08.10.2008**
(21) Anmeldenummer: 04715253.3
(22) Anmeldetag: 27.02.2004
(51) Int. Cl.: G06F 17/30, H04L 29/06, G05B 19/418

(54) **VERFAHREN ZUM ANGLEICHEN EINES AUF EINER CLIENT-DATENVERARBEITUNGSEINRICHTUNG ANGEZEIGTEN DATENBESTANDES AN EINEN AUF EINER SERVER-DATENVERARBEITUNGSEINRICHTUNG GESPEICHERTEN QUELLDATENBESTAND**
METHOD FOR ADAPTING A DATABASE DISPLAYED ON A CLIENT DATA PROCESSING UNIT TO A SOURCE DATABASE STORED ON A SERVER DATA PROCESSING UNIT
PROCEDE D'ADAPTATION D'UN JEU DE DONNEES AFFICHE SUR UN DISPOSITIF DE TRAITEMENT DE DONNEES CLIENT A UN JEU DE DONNEES SOURCE MEMORISE DANS UN DISPOSITIF DE TRAITEMENT DE DONNEES SERVEUR

(30) Priorität: 25.04.2003 DE 10319887
(43) Veröffentlichungstag der Anmeldung: 25.01.2006
(73) Patentinhaber: SIEMENS AKTIENGESELLSCHAFT, 80333 München (DE)
(72) Erfinder: DIETRICH, Fabian, 90461 Nürnberg (DE); JACHMANN, Thomas, 90475 Nürnberg (DE); RÜCKEL, Uwe, 13591- Berlin (DE); ZALAR, Eduard, 90455 Nürenberg (DE)
(86) Internationale Anmeldenummer: PCT/DE2004/000420
(87) Internationale Veröffentlichungsnummer: WO 2004/097666

(56) Entgegenhaltungen:
- US-A1- 2002 062 340
- US-A1- 2002 069 204
- US-A1- 2003 001 888
- US-B1- 6 253 228

## Beschreibung

Zur Bereitstellung von Daten und Informationen und deren Anzeige oder Weiterverarbeitung mit Hilfe von Datenverarbeitungseinrichtungen werden heutzutage verstärkt sogenannte Server-Client-Systeme eingesetzt. Dabei liegen die Daten bzw. Informationen zunächst als Quelldatenbestand auf einem zentralen Rechner, einem so genannten Server, vor. Mit diesem Server können ein oder mehrere Rechner, so genannte Clients, verbunden sein, über die ein Benutzer mittels spezieller Programme Zugriff auf die von dem Server gespeicherten Daten bzw. Informationen erlangen kann. Dazu müssen die gewünschten Daten vom Server an den entsprechenden Client übertragen werden. Dort bilden sie einen Datenbestand des Clients, der dort dem Benutzer angezeigt oder auch weiterverarbeitet werden kann. Die Verbindung zwischen dem Server und den Clients erfolgt üblicherweise über ein Netzwerk. Sehr häufig sind Server und Client über das Internet miteinander verbunden.

Vom Server bereitgestellte Daten können hierbei im Falle des Internets beispielsweise sogenannte HTML-Dokumente sein. HTML (Hypertext Markup Language) ist eine strukturierte Sprache zur Angabe des Inhalt eines darzustellenden Dokuments einerseits und des Anzeigeformats, in dem der Inhalt dargestellt werden soll, andererseits. Bei dem angezeigten HTML-Dokument spricht man beispielsweise von einer HTML-Seite, bei der dieser Anzeige zugrundeliegenden Beschreibung - also dem Quelltext des HTML-Dokuments - von einem HTML-Code. HTML-Dokumente besitzen außerdem den Vorteil, von handelsüblichen Anzeigeprogrammen (Browsern), lesbar und darstellbar zu sein. Zusätzlich können zu übermittelnde Daten z.B. auch Bild-, Ton- oder Textdokumente sein.

Der Client hat die Möglichkeit, über spezielle Programme auf die übermittelten Daten zuzugreifen und diese anzuzeigen bzw. weiterzuverarbeiten. Im Falle des Internets handelt es sich bei solchen Programmen im Wesentlichen um so genannte Web-Browser, wie beispielsweise den Netscape-Navigator™ oder den Internet-Explorer™, die den HTML-Code interpretieren und mittels derer eine Darstellung des übermittelten HTML-Dokuments als HTML-Seite auf einer Anzeigeeinrichtung, z. B. einem Monitor des Clients, vorgenommen werden kann.

Üblicherweise wird nach der Übertragung eines solchen HTML-Dokuments datentechnisch die Verbindung zwischen Client und Server unterbrochen, und die Anzeige auf dem Client beschränkt sich auf den übermittelten Dateninhalt, also beispielsweise das übermittelte HTML-Dokument. Auf dem Server ggf. auftretende Veränderungen des ursprünglichen Informationsgehaltes werden nach der Übertragung nicht mehr an den Client weitergegeben.

In vielen Fällen ist es aber wünschenswert, die auf dem Client vorhandenen Daten bzw. Informationen regelmäßig zu aktualisieren bzw. den Datenbestand des Clients an den Quelldatenbestand des Servers anzugleichen, wie beispielsweise in der US 2003/001888.

Eine solche regelmäßige Aktualisierung ist z. B. auf dem Gebiet der Automatisierungstechnik von großer Wichtigkeit. Bei einer Automatisierungsanlage, also einer Anlage zum Steuern, Leiten und Überwachen von verschiedenen Systemen, wie z.B.

Elektroenergiesystemen (z.B. Energieübertragungsleitungen, Schaltanlagen, elektrische Maschinen) und verfahrenstechnischen Anlagen (z.B. Kläranlagen), sind beispielsweise mehrere so genannte Feldgeräte mit einem Server verbunden. Die Feldgeräte liefern beispielsweise Informationen über ihren jeweiligen Zustand, vom jeweiligen System aufgenommene Messwerte, Statusinformationen sowie Ereignis- und Alarmmeldungen an den Server, auf dem diese gespeichert werden (vgl. z.B. DE 101 51 119 A1).

Ein Benutzer, der über einen Client auf den Server zugreift, erhält zunächst nur einen statischen Überblick, sozusagen eine Momentaufnahme, des zum Übertragungszeitpunkt auf dem Server gespeicherten Dateninhalts und keine dynamische Anpassung der auf dem Client dargestellten Informationen an neue, von den Feldgeräten an den Server übermittelte Ereignisse.

Häufig ändert sich nämlich nicht die gesamte HTML-Seite auf dem Server, sondern nur ein spezieller Teil, beispielsweise eine Abbildung auf der HTML-Seite oder bestimmte Textabschnitte. In einem solchen Fall kann man von statischen (festliegenden) und dynamischen (veränderlichen) Bereichen der HTML-Seite sprechen.

Bisher gängige Methoden zum Aktualisieren des Datenbestands eines Clients sehen beispielsweise vor, dass in regelmäßigen Abständen die Daten des Servers, beispielsweise die auf dem Web-Browser angezeigte HTML-Seite, vollständig neu vom Server abgerufen werden. Dabei werden auch ggf. eingetretene Veränderungen an den Client übertragen und werden dort angezeigt. Dazu ist z. B. in einer Steuerleiste des Internet-Explorer™ eine Schaltfläche "Aktualisieren" vorhanden, bei deren Aktivierung das entsprechende HTML-Dokument erneut vom Server abgerufen wird. Diese Vorgehensweise kann auch automatisiert sein, d. h., im HTML-Code der jeweiligen HTML-Seite ist ein Befehl vorhanden, der eine Aktualisierung der jeweiligen HTML-Seite in vorgebbaren Zeitabständen auslöst. Beispielsweise kann auf diese Weise ein HTML-Dokument alle fünf Sekunden vom Server neu abgerufen werden. Der Nachteil dieses Verfahrens ist, dass immer das vollständige HTML-Dokument vom Server neu heruntergeladen werden muss, selbst wenn nur kleine und vom Datenumfang geringe Änderungen eingetreten sind. Dabei kann besonders nachteilig ein Verlust von möglicherweise bereits clientseitig vorgenommenen Eingaben in dafür vorgesehenen Feldern auftreten. Ferner ist auch von Nachteil, dass die angezeigte HTML-Seite nach der Aktualisierung "springt", d. h., es wird bei über die Anzeigeeinrichtung (Monitor) des Clients hinausgehenden HTML-Seiten beispielsweise nach einer Aktualisierung immer der obere Teil der HTML-Seite angezeigt, ohne die reale Position der HTML-Seite vor der Aktualisierung zu berücksichtigen.

Die Aufgabe der Erfindung ist es, ein Verfahren zum Angleichen eines auf einer Client-Datenverarbeitungseinrichtung angezeigten Datenbestandes an einen mittels einer Server-Datenverarbeitungseinrichtung gespeicherten Quelldatenbestand anzugeben, bei dem möglichst kleine Datenmengen zwischen der Server-Datenverarbeitungseinrichtung und der Client-Datenverarbeitungseinrichtung übertragen werden müssen.

Zur Lösung dieser Aufgabe ist erfindungsgemäß ein Verfahren der genannten Art vorgesehen, bei dem die folgenden Schritte durchgeführt werden:
Übermitteln eines Vergleichs-Kennwertes, der den Zeitrang des momentanen Datenbestandes der Client-Datenverarbeitungseinrichtung angibt, von der Client-Datenverarbeitungseinrichtung an die Server-Datenverarbeitungseinrichtung;
   - Ermitteln eines Teils des Quelldatenbestandes der Server-Datenverarbeitungseinrichtung, der einen jüngeren Zeitrang aufweist als der durch den Vergleichs-Kennwert angegebene Zeitrang des momentanen Datenbestandes der Client-Datenverarbeitungseinrichtung;
   - Übermitteln des ermittelten Teils des Quelldatenbestandes an die Client-Datenverarbeitungseinrichtung; und
   - Aufnehmen des von der Server-Datenverarbeitungseinrichtung übermittelten Teils des Quelldatenbestandes in den Datenbestand der Client-Datenverarbeitungseinrichtung unter Bildung eines aktualisierten Datenbestandes der Client-Datenverarbeitungseinrichtung.

Der wesentliche Vorteil dieses Verfahrens besteht darin, dass nur vergleichsweise kleine Datenmengen zwischen der Server-Datenverarbeitungseinrichtung und Client-Datenverarbeitungseinrichtung übertragen werden. Es findet nämlich zum Einen nur die Übermittlung eines Vergleichs-Kennwertes von der Client-Datenverarbeitungseinrichtung zur Server-Datenverarbeitungseinrichtung als Anforderung einer Datenaktualisierung statt; zum Anderen übermittelt die Server-Datenverarbeitungseinrichtung als Antwort darauf nicht ihren vollständigen Quelldatenbestand, also alle zum jeweiligen Zeitpunkt auf der Server-Datenverarbeitungseinrichtung gespeicherten Daten, die der Anzeige auf der Client-Datenverarbeitungseinrichtung zugrunde liegen, sondern nur solche Daten, die einen jüngeren Zeitrang aufweisen als diejenigen auf der Client-Datenverarbeitungseinrichtung. Es werden also immer nur für den Client neue Daten vom Server zum Client übertragen.

Vorteilhafterweise kann bei einer Ausführungsform des erfindungsgemäßen Verfahren vorgesehen sein, dass der Vergleichs-Kennwert und der ermittelte Teil des Quelldatenbestandes zwischen der Server-Datenverarbeitungseinrichtung und der Client-Datenverarbeitungseinrichtung über ein Netzwerk übertragen werden. Die Übertragung über ein Netzwerk bietet mehreren Client-Datenverarbeitungseinrichtungen die Möglichkeit, auf die Server-Datenverarbeitungseinrichtung zuzugreifen. Als Netzwerk kann in diesem Zusammenhang beispielsweise ein LAN (Local Area Network) oder ein WLAN (Wireless LAN) angesehen werden.

Vorteilhafterweise kann es sich bei dem Netzwerk um das Internet oder ein Intranet handeln. Das Internet bietet einer großen Anzahl von Benutzern die Möglichkeit, von unterschiedlichen Standorten mittels einer Client-Datenverarbeitungseinrichtung auf die Server-Datenverarbeitungseinrichtung zuzugreifen. Ein auf einen speziellen Benutzerkreis beschränktes Internet-basiertes Netzwerk, wie z. B. ein firmeninternes Intranet, bietet für seinen speziellen Benutzerkreis dieselben Vorteile.

Vorteilhafterweise kann der Datenbestand der Client-Datenverarbeitungseinrichtung mittels einer auf der Client-Datenverarbeitungseinrichtung installierten Browsereinrichtung angezeigt werden. Die Anzeige mittels einer Browsereinrichtung besitzt den Vorteil, dass hierzu keine besonderen Programme auf der Client-Datenverarbeitungseinrichtung installiert sein müssen, außer handelsüblichen Browsereinrichtungen, wie beispielsweise dem Netscape-Navigator^{™} oder dem Internet-Explorer^{™}.

Bei einer weiteren vorteilhaften Ausführungsform des erfindungsgemäßen Verfahrens kann ferner vorgesehen sein, dass mittels der Browsereinrichtung ein von der Server-Datenverarbeitungseinrichtung an die Client-Datenverarbeitungseinrichtung übertragenes HTML-Dokument angezeigt wird und der Datenbestand der Client-Datenverarbeitungseinrichtung zur Anzeige in dieses HTML-Dokument integriert wird. Diese Ausführungsform betrifft den Fall, dass die Anzeige auf der Browsereinrichtung sowohl statische als auch dynamische Bereiche enthält. In diesem Fall wird (einmalig) von der Server-Datenverarbeitungseinrichtung an die Client-Datenverarbeitungseinrichtung ein HTML-Dokument übertragen, mittels dessen in einer HTML-Seite die statischen Bereiche dargestellt werden. Der (regelmäßig aktualisierte) Datenbestand der Client-Datenverarbeitungseinrichtung, beispielsweise eine Liste von Messwerten, wird innerhalb eines dynamischen Bereichs der HTML-Seite angezeigt. Eine Aktualisierung ist somit nur für den dynamischen Bereich notwendig.

Vorteilhafterweise kann weiterhin vorgesehen sein, dass von der Browsereinrichtung über eine von dem HTML-Dokument bereitgestellte Software-Schnittstelle der Vergleichs-Kennwert an die Server-Datenverarbeitungseinrichtung übermittelt wird und mittels dieser Software-Schnittstelle der von der Server-Datenverarbeitungseinrichtung an die Client-Datenverarbeitungseinrichtung übertragene. Teil des Quelldatenbestandes in den Inhalt des von der Browsereinrichtung angezeigten HTML-Dokuments eingebunden wird. Eine solche Software-Schnittstelle wird beispielsweise durch ein eigenständiges kleines Programm innerhalb des HTML-Codes der HTML-Seite angegeben. Solche kleinen eigenständigen Programme sind beispielsweise als sogenannte Applets bereits aus der EP 0 972 386 B1 bekannt. Der Nachteil eines solchen Applets ist beispielsweise ein Technologiebruch innerhalb der Anzeige der Browsereinrichtung. So werden etwa Einstellungen für Schriftgröße, Hintergrundfarbe und Schriftart, die für die HTML-Seite getroffen wurden, nicht in die Anzeige der Applets übernommen. Ferner muss auf der entsprechenden Client-Datenverarbeitungseinrichtung zum Ausführen der Applets ein weiteres Programm, im Fall von Java-Applets beispielsweise eine so genannte Java-Virtual-Machine, installiert sein.

Als besonders vorteilhaft wird allerdings angesehen, dass zur Übertragung des Vergleichs-Kennwertes an die Server-Datenverarbeitungseinrichtung und des ermittelten Teils des Quelldatenbestandes an die Client-Datenverarbei-tungseinrichtung und zum Einbinden des aktualisierten.Datenbestandes der Client-Datenverarbeitungseinrichtung in das HTML-Dokument ein Web-Service verwendet wird. Ein so genannter Web-Service ist eine vom Standardisierungsgremium W3C festgelegte Methode zur Datenübermittlung zwischen einzelnen Datenverarbeitungseinrichtungen bzw. zwischen auf diesen Datenverarbeitungseinrichtungen ablaufenden Programmen (vgl. hierzu insbesondere im Internet www.w3.org/2002/ws/). Mittels eines solchen Web-Services können Daten, ohne den Umfang eines HTML-Dokumentes zu verlassen, von der Server-Datenver-arbeitungseinrichtung abgerufen werden und nach deren Übertragung ohne einen Technologiebruch durch die Browsereinrichtung dargestellt werden. Aktuelle Versionen von handelsüblichen Browsereinrichtungen sind dafür eingerichtet, solche Web-Services ausführen und deren Daten darstellen zu können, so dass keine gesonderte Installation von Erweiterungen für die Browsereinrichtung vorgenommen werden muss. Ebenso muss auf der Client-Datenverarbeitungseinrichtung kein weiteres Programm zum Ausführen von Applets, wie z. B. eine Java-Virtual-Machine, installiert sein.

Eine vorteilhafte Ausführungsform des erfindungsgemäßen Verfahrens sieht zudem vor, dass als Web-Service ein WebService Client Behavior verwendet wird. Ein WebService Client Behavior ist eine von Microsoft in seinem Internet-Browser "Internet-Explorer" angebotene Form eines Web-Services. Der Web-Service Client Behavior bietet neben einer einfacheren Handhabung insbesondere einen erweiterten Funktionsumfang. Ferner belegt der WebService Client Behavior ggf. geringere Rechnerkapazitäten.

Vorteilhafterweise wird das erfindungsgemäße Verfahren in vorgebbaren Zeitabständen wiederholt durchgeführt. Auf diese Weise kann vorteilhaft eine nahezu kontinuierliche Anpassung des Dateninhalts der Client-Datenverarbeitungseinrichtung an den Quelldatenbestand der Server-Datenverarbeitungseinrichtung vorgenommen werden, ohne dass dazu manuelle Aktualisierungsaufrufe notwendig wären. Der Zeitabstand zwischen den jeweiligen Anpassungsvorgängen kann hierbei beliebig vorgegeben bzw. parametriert werden.

Ferner kann gemäß einer weiteren vorteilhaften Ausführungsform des erfindungsgemäßen Verfahrens vorgesehen sein, dass von zumindest einem an die Server-Datenverarbeitungseinrichtung angeschlossenen elektrischen Gerät Datenwerte an die Server-Datenverarbeitungseinrichtung übermittelt werden und diese übermittelten Datenwerte auf der Server-Datenverarbeitungseinrichtung unter Ergänzen bzw. Fortschreiben des Quelldatenbestandes gespeichert werden. Ein solcher Fall tritt insbesondere bei Automatisierungssystemen häufig auf. Die von den elektrischen Geräten an die Server-Datenverarbeitungseinrichtung übermittelten Datenwerte können hierbei beispielsweise Messwerte, Statuswerte, Ereignisse oder allgemeine Informationen (Name, Typ, Registrierungsnummer) über die jeweils angeschlossenen elektrischen Geräte beinhalten.

Bei dieser Ausgestaltung kann weiterhin vorteilhafterweise vorgesehen sein, dass jedem übermittelten Datenwert ein seinen Zeitrang angebender Kennwert zugeordnet wird und die Datenwerte gemeinsam mit den jeweiligen Kennwerten auf der Server-Datenverarbeitungseinrichtung gespeichert werden. Ein solcher einen Zeitrang angebender Kennwert kann beispielsweise aus einem Zeitstempel oder einer fortlaufenden Nummerierung bestehen.

In einer weiteren vorteilhaften Ausführungsform des erfindungsgemäßen Verfahren kann vorgesehen sein, dass zum Ermitteln desjenigen Teils des Quelldatenbestandes mit einem jüngeren Zeitrang als dem Zeitrang des momentanen Datenbestandes der Client-Datenverarbeitungseinrichtung der Vergleichs-Kennwert mit den jeweils gemeinsam mit den jeweiligen Datenwerten abgespeicherten Kennwerten verglichen wird und der gesuchte Teil des Quelldatenbestandes aus denjenigen Datenwerten gebildet wird, deren Kennwerte einen jüngeren Zeitrang angeben als der Vergleichs-Kennwert. Auf diese Weise kann unter Verwendung eines einfachen Vergleichsschrittes jeweils der Teil des auf der Server-Datenverarbeitungseinrichtung gespeicherten Quelldatenbestandes ermittelt werden, der an die Client-Datenverarbeitungseinrichtung zu übertragen ist.

Vorteilhafterweise kann als das zumindest eine an die Server-Datenverarbeitungseinrichtung angeschlossene elektrische Gerät ein Feldgerät verwendet werden. Gemäß einer weiteren vorteilhaften Ausführung des erfindungsgemäßen Verfahrens kann als Feldgerät ein Schutz- oder Leitgerät verwendet werden. Auf diese Weise lässt sich besonders vorteilhaft ein Leit- oder Automatisierungssystem aufbauen.

Gemäß einer weiteren vorteilhaften Ausführungsform kann als Server-Datenverarbeitungseinrichtung eine Anordnung aus mehreren Server-Rechnern verwendet werden. Der wesentliche Vorteil dieser auch als sog. Server-Farm bezeichneten Ausführungsform besteht darin, dass eine Platzierung mehrerer Server-Datenverarbeitungseinrichtungen an entsprechend günstigen Stellen möglich ist. So kann beispielsweise je eine Server-Datenverarbeitungseinrichtung an einzelnen - lokal entfernt voneinander liegenden - Gruppen von Feldgeräten platziert werden

Zur näheren Erläuterung der Erfindung sind in
- Figur 1: ein Leit- und Steuersystem, in
- Figur 2: ein Ausführungsbeispiel des erfindungsgemäßen Verfahrens in einem Fließbild und in
- Figur 3: ein Beispiel einer Anzeige des Datenbestandes einer Client-Datenverarbeitungseinrichtung mittels einer Browsereinrichtung in Form einer HTML-Seite
dargestellt.

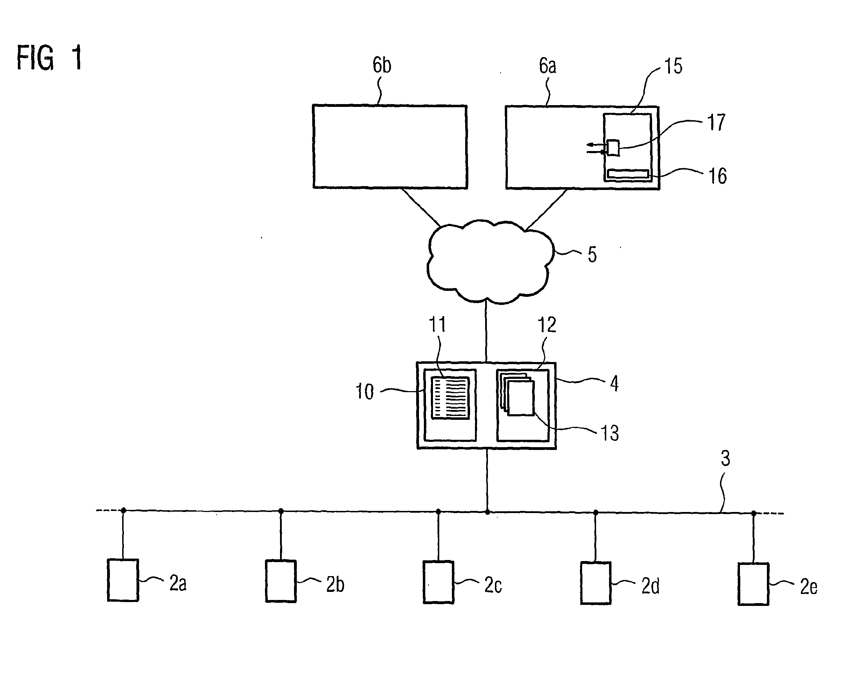

Figur 1 zeigt ein Automatisierungs- bzw. ein Steuer- und Leitsystem, wie es beispielsweise zur Steuerung und Überwachung von energietechnischen Anlagen, wie elektrischen Energieversorgungsnetzen oder elektrischen Maschinen eingesetzt werden kann. Ferner kommen solche Steuer- und Leitsysteme auch bei verfahrenstechnischen Prozessen oder bei der automatisierten Produktherstellung zum Einsatz. Bei dem Steuer- und Leitsystem gemäß Figur 1 sind an dem zu steuernden bzw. zu überwachenden System (in Figur 1 nicht dargestellt) so genannte Feldgeräte 2a bis 2e vorgesehen; solche Feldgeräte können bei einer energietechnischen Anlage beispielsweise elektrische Schutzgeräte zur Überwachung der energietechnischen Anlage oder elektrische Leitgeräte zur Steuerung sein. Die einzelnen Feldgeräte 2a bis 2e sind untereinander mit einem Datenbus 3 verbunden. Mit dem Datenbus 3 steht weiterhin eine Server-Datenverarbeitungseinrichtung 4 in Verbindung. Ein Ausgang der Server-Datenverarbeitungseinrichtung 4 ist über ein nur schematisch dargestelltes Netzwerk 5 mit einer Client-Datenverarbeitungseinrichtung 6a verbunden. Das Netzwerk 5 kann beispielsweise ein lokales Netzwerk (LAN), ein Intranet oder das Internet sein. Im Rahmen der Erfindung können an das Netzwerk 5 ein oder beliebig viele weitere Client-Datenverarbeitungseinrichtungen angeschlossen werden; in Figur 1 ist nur beispielhaft eine weitere Client-Datenverarbei-tungseinrichtung 6b dargestellt. Für die folgenden Ausführungen soll beispielhaft angenommen werden, dass nur über die Client-Datenverarbeitungseinrichtung 6a auf die Server-Daten-verarbeitungseinrichtung 4 zugegriffen werden soll. Außerdem ist es nicht zwingend notwendig, dass die Server-Datenverar-beitungseinrichtung 4 von einem einzigen Server-Rechner gebildet wird, vielmehr kann auch aus mehreren räumlich voneinander getrennten Server-Rechnern eine so genannte Serverfarm gebildet werden. Die Gesamtheit aller Server-Rechner bildet dann die Server-Datenverarbeitungseinrichtung 4.

Die Feldgeräte 2a bis 2e generieren fortlaufend Datenwerte, um den jeweiligen Status der zu überwachenden bzw. zu steuernden Anlage anzugeben. Dabei kann es sich beispielsweise um aktuelle Messwerte, Ereignisse oder auch Alarme handeln, die im Folgenden zusammenfassend als Datenwerte bezeichnet werden sollen. Diese Datenwerte werden von den einzelnen Feldgeräten 2a bis 2e über den Datenbus 3 an die Server-Datenverarbeitungseinrichtung 4 übermittelt. Dort werden die einzelnen Datenwerte innerhalb eines Speicherbereiches 10, beispielsweise eines Ringpuffers, fortlaufend gespeichert. Zusätzlich zu den Datenwerten wird jeweils ein den Zeitrang bzw. den Speicherzeitpunkt des jeweiligen Datenwertes kennzeichnender Kennwert gemeinsam mit dem jeweiligen Datenwert abgespeichert. Im einfachsten Fall werden die jeweiligen Datenwerte je nach ihrem Eintreffen bei der Server-Datenverarbeitungseinrichtung mit einer fortlaufenden Nummerierung abgespeichert. In diesem Fall würde auf dem Speicherbereich 10 der Server-Datenverar-beitungseinrichtung 4 eine Liste 11 abgelegt werden, die jeweils einen Kennwert in Form einer fortlaufend vergebenen Nummer und jeder dieser Nummern zugeordnet einen bestimmten Datenwert enthält. Diese auf dem Speicherbereich 10 abgelegte Liste 11 wird fortlaufend mit dem Eintreffen weiterer Datenwerte der Feldgeräte 2a bis 2e erweitert. Beispielsweise werden neu eingetroffene Datenwerte mit der jeweils aktuellen Nummerierung an das Ende der im Speicherbereich 10 abgelegten Liste 11 angehängt. Es handelt sich also um eine dynamisch fortgeschriebene Liste.

Mittels der über das Netzwerk 5 an die Server-Datenverarbeitungseinrichtung 4 angeschlossenen Client-Datenverarbeitungseinrichtung 6a soll nun der sich fortlaufend verändernde bzw. vergrößernde Quelldatenbestand der Server-Datenverarbeitungseinrichtung 4 dynamisch angezeigt werden. Dynamisch bedeutet in diesem Zusammenhang, dass zeitnah nach Eintreffen und Abspeichern eines neuen Datenwertes auf der Server-Datenverarbeitungseinrichtung 4 dieser neue Datenwert mittels der Client-Datenverarbeitungseinrichtung 6a angezeigt und ggf. auch weiterverarbeitet werden kann. Dazu muss der Datenbestand der Client-Datenverarbeitungseinrichtung 6a fortlaufend an den Quelldatenbestand der Server-Datenverarbeitungs-einrichtung 4 angepasst werden.

Zur Anzeige des Datenbestandes der Client-Datenverarbeitungseinrichtungen 6a kann auf diesem beispielsweise eine Browsereinrichtung 15, also ein handelsübliches Programm zum Betrachten von im Internet verwendeten Dokumenten, wie HTML-Dokumenten, installiert sein. Bei solchen Browsereinrichtungen kann es sich beispielsweise um den Internet Explorer^{™} oder Netscape-Navigator^{™} handeln.

Üblicherweise werden dynamische Daten, im vorliegenden Fall die von den Feldgeräten 2a bis 2e generierten Datenwerte, auf der Browsereinrichtung 15 gemeinsam mit statischen Daten, im vorliegenden Fall beispielsweise die Bezeichnung der einzelnen Feldgeräte und ggf. eine Struktur des Steuer- und Leitsystems, angezeigt. Dazu ist auf der Server-Datenverarbeitungseinrichtung 4 in einem weiteren Speicherbereich 12 zumindest ein HTML-Dokument 13 abgelegt, das bei erstmaligem Kontaktieren der Server-Datenverarbeitungseinrichtung 4 durch die Client-Datenverarbeitungseinrichtung 6a an die Client-Datenverarbeitungseinrichtung 6a übertragen wird.

Innerhalb des HTML-Dokuments 13 existiert ein Bereich zur Anzeige dynamischer - also zeitlich veränderlicher - Daten, wie beispielsweise der von den Feldgeräten 2a bis 2e generierten Datenwerte. Die (dynamische) Anzeige der Datenwerte wird also in die (statische) Anzeige in dem HTML-Dokument 13 integriert.

Mit Hilfe der auf der Client-Datenverarbeitungseinrichtung 6a installierten Browsereinrichtung 15 können sowohl das HTML-Dokument 13 als HTML-Seite als auch die zeitlich veränderlichen Datenwerte aus der Liste 11 angezeigt werden. Dazu wird bei erstmaligem Aufruf der Server-Datenverarbeitungsein-richtung 4 mittels der Browsereinrichtung 15 zunächst das HTML-Dokument 13 an die Client-Datenverarbeitungseinrichtung 6a übertragen und dort üblicherweise in einem Speicherbereich eines flüchtigen Speichers 16 abgelegt. Gleichzeitig mit dem HTML-Dokument 13 können auch die zum Zeitpunkt des Erstaufrufs auf der Server-Datenverarbeitungseinrichtung 4 vorhandenen Datenwerte aus der Liste 11 an die Client-Datenverarbeitungseinrichtung 6a übertragen werden. Bei einer Anzeige des HTML-Dokumentes 13 als HTML-Seite mittels der Browsereinrichtung 15 werden diese Datenwerte, beispielsweise in Form einer Tabelle, in die. HTML-Seite integriert. Danach wird üblicherweise die Verbindung zwischen der Client-Datenverarbeitungseinrichtung 6a und der Server-Datenverarbeitungseinrichtung 4 datentechnisch unterbrochen.

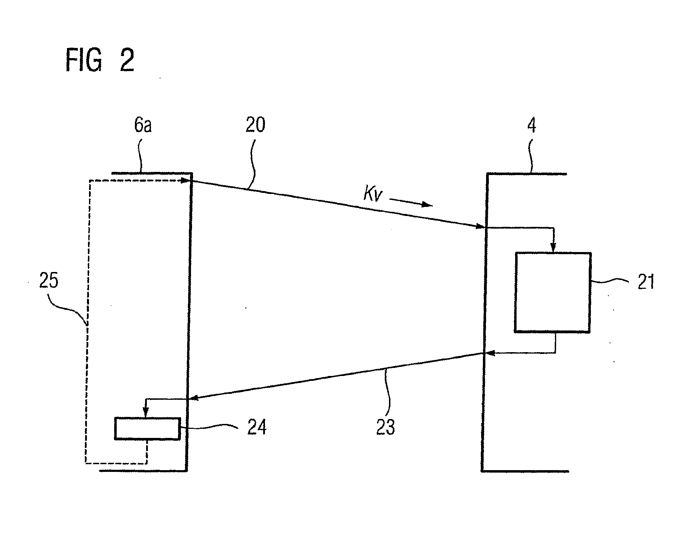

Zur Erläuterung des Verfahrens zur Anpassung des Datenbestandes der Client-Datenverarbeitungseinrichtung 6a an den Quelldatenbestand der Server-Datenverarbeitungseinrichtung 4 soll im Folgenden Figur 2 hinzugezogen werden.

In Figur 2 ist in einem Fließbild der Ablauf eines Ausführungsbeispiels des erfindungsgemäßen Verfahrens dargestellt. Zum Anpassen des Datenbestandes der Client-Datenverarbeitungseinrichtung 6a an den Quelldatenbestand der Server-Datenverarbeitungseinrichtung 4 und damit zum Aktualisieren der Anzeige der Datenwerte auf der Browsereinrichtung 15 richtet die Client-Datenverarbeitungseinrichtung 6a eine einleitende Anfrage 20 an die Server-Datenverarbeitungseinrichtung 4. Bei dieser Anfrage 20 wird ein den Zeitrang des momentanen Datenbestandes der Client-Datenverarbeitungseinrichtung 6a angebender Vergleichs-Kennwert Kᵥ an die Server-Datenverarbeitungseinrichtung 4 übermittelt. Bei diesem Vergleichs-Kennwert Kᵥ kann es sich beispielsweise um einen Zeitstempel der letzten Aktualisierung des Datenbestandes der Client-Datenverarbeitungseinrichtung 4 handeln. Besonders einfach kann jedoch ein Vergleichs-Kennwert Kᵥ ausgewählt werden, wenn den einzelnen Datenwerten des Datenbestandes der Client-Datenverarbeitungseinrichtung 6a, jeweils eine fortlaufende Nummerierung zugeordnet ist, so dass beispielsweise der jüngste an die Client-Datenverarbeitungseinrichtung 6a übertragene Datenwert die höchste momentan vergebene fortlaufende Nummer des Datenbestandes besitzt.

Nach dem Empfang des Vergleichs-Kennwertes Kᵥ findet in der Server-Datenverarbeitungseinrichtung 4 ein Vergleichsschritt 21 statt, während dessen überprüft wird, ob in dem Speicherbereich 10 der Server-Datenverarbeitungseinrichtung 4 jüngere als durch den Zeitrang des übermittelten Vergleichs-Kennwertes Kᵥ angegebene Datenwerte vorliegen. Wenn beispielsweise den im Speicherbereich 10 abgespeicherten Datenwerten bereits zum Speicherzeitpunkt ein ihren Zeitrang angebender Kennwert z.B. in Form eines Zeitstempels oder einer fortlaufenden Nummerierung zugeordnet worden ist, so erfolgt die Ermittlung der gesuchten neuen Datenwerte durch einen Vergleich der Kennwerte mit dem Vergleichs-Kennwert Kᵥ.

Der auf diese Weise ermittelte Anteil des Quelldatenbestandes wird in einem Antwortschritt 23 von der Server-Datenverarbeitungseinrichtung 4 an die Client-Datenverarbeitungseinrichtung 6a übertragen.

In der Client-Datenverarbeitungseinrichtung 6a wird in einem abschließenden Integrationsschritt 24 der nunmehr übermittelte Anteil des Quelldatenbestandes der Server-Datenverarbei-tungseinrichtung 4 in den bisherigen Datenbestand der Client-Datenverarbeitungseinrichtung 6a aufgenommen und so ein aktualisierter Datenbestand der Client-Datenverarbeitungseinrich-tung 6a gebildet. Die Aufnahme erfolgt beispielsweise durch Integration der neuen, in dem übertragenen Anteil des Quelldatenbestandes enthaltenen Datenwerte in eine auf der Browsereinrichtung 15 angezeigte Tabelle.

Wie insbesondere beim Antwortschritt 23 festgestellt werden kann, muss zur Anpassung des Datenbestandes der Client-Datenverarbeitungseinrichtung 6a an den Quelldatenbestand der Server-Datenverarbeitungseinrichtung 4 nicht jeweils deren kompletter Quelldatenbestand an die Client-Datenverarbei-tungseinrichtung 6a übertragen werden. Vielmehr ist es ausreichend, wenn nur die für die Client-Datenverarbeitungseinrichtung 6a wirklich neuen Datenwerte übertragen werden. Auf diese Weise kann sehr effizient unnötiger Datenverkehr innerhalb des Netzwerks vermieden werden.

Das Verfahren gemäß Figur 2 kann in vorgebbaren Zeitabständen wiederholt werden, um eine automatische Datenaktualisierung zu erreichen. Dies ist mit einem strichlierten Pfeil 25 in Figur 2 angedeutet.

Zur Durchführung einer regelmäßigen Anfrage an die Server-Datenverarbeitungseinrichtung 4 und zum Einbinden der übermittelten Datenwerte in die mittels der Browsereinrichtung 15 erzeugte Anzeige des Datenbestandes der Client-Datenverarbeitungseinrichtung 6a ist innerhalb der Browsereinrichtung 15 eine Software-Schnittstelle 17 (Figur 1) vorgesehen. Dazu ist beispielsweise in den HTML-Code, mit dem die Anzeige (HTML-Seite) auf der Browsereinrichtung 15 generiert wird, ein kurzes Programm, ein so genannter Skript-Code, eingebunden, mit dessen Hilfe die gewünschte Aktualisierung stattfinden kann. Ein solcher Skript-Code kann beispielsweise ein so genanntes Java-Applet sein. Nachteilig an einem solchen Java Applet ist jedoch, dass hierzu einerseits die Browsereinrichtung mit einer Java-Virtual-Machine ausgerüstet sein muss, also einem zusätzlichen Programm zum Interpretieren des Java-Applets, und zum anderen das benötigte Java Applet zunächst vom Server heruntergeladen werden muss.

Besonders vorteilhaft kann daher die Softwareschnittstelle 17 ausgebildet sein, wenn ein so genannter Web-Service angewendet wird. Ein Web-Service ist eine von dem Standardisierungsgremium W3C festgelegte Methode zum Datenaustausch zwischen einzelnen Computern bzw. auf diesen ablaufenden Applikationen. Im vorliegenden Fall ist in dem von der Browsereinrichtung 15 dargestellten HTML-Dokument innerhalb des HTML-Codes an derjenigen Stelle, wo die zu aktualisierenden Daten angezeigt werden sollen, ein Funktionsaufruf für einen solchen Web-Service eingebunden, mit dem etwa auf einen speziellen Speicherbereich der Server-Datenverarbeitungseinrichtung verwiesen wird. Beispielsweise kann mit dem Web-Service-Aufruf der Speicherbereich 10 der Server-Datenverarbeitungseinrichtung 4 adressiert sein. Ferner enthält der Web-Service-Aufruf die Anweisung, dass zum Starten einer Aktualisierung der den Zeitrang des momentanen Datenbestandes der Client-Datenverarbeitungseinrichtung 6a angebende Vergleichs-Kennwert Kᵥ an die Server-Datenverarbeitungseinrichtung 4 übertragen werden soll. Schließlich enthält der Web-Service-Aufruf eine Anweisung, was mit den von der Server-Datenverarbeitungseinrichtung 4 an die Client-Datenverarbeitungseinrichtung 6a zurückübertragenen Datenwerten geschehen soll, also beispielsweise deren Einbindung an das Ende einer bereits bestehenden, mittels der Browsereinrichtung 15 angezeigten Tabelle.

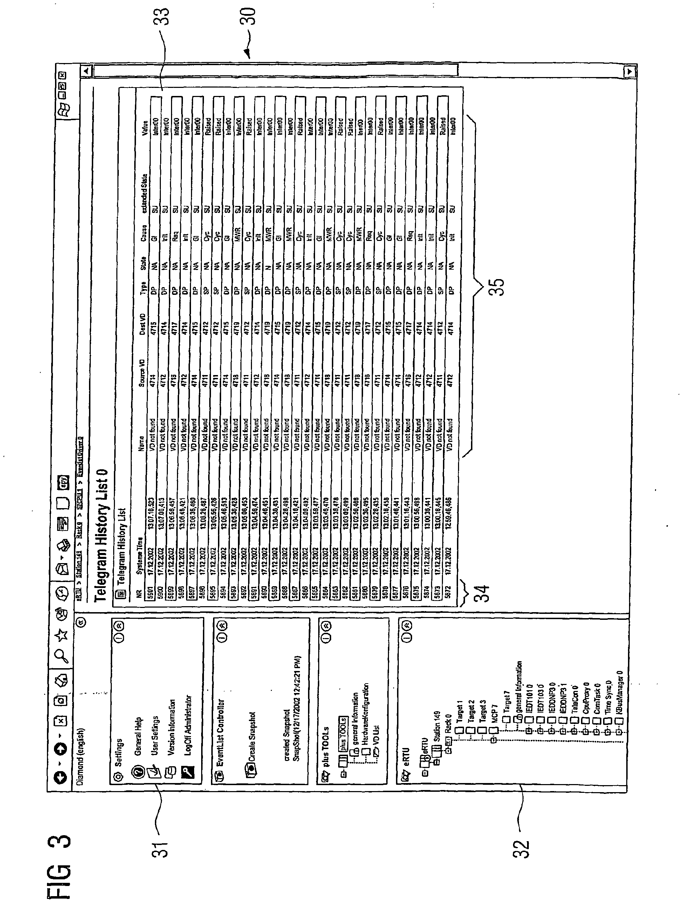

In Figur 3 ist nur beispielhaft eine mögliche Anzeige einer solchen Browsereinrichtung 15 in Form einer HTML-Seite dargestellt. In einem Browseranzeigefenster 30 lassen sich beispielsweise auf der linken Seite einige generelle Anzeigen 31 und 32 zur Konfiguration der Browseranzeige und zur Navigation innerhalb des gesamten Leit- und Steuersystems, beispielsweise für den Zugriff von der Client-Datenverarbeitungsein-ichung 6a (vgl. Figur 1) auf eines der Feldgeräte 2a bis 2e, erkennen. Auf der rechten Seite ist eine Tabelle 33 angegeben, in der die Datenwerte, die durch die Feldgeräte 2a bis 2e generiert wurden, angezeigt werden. Man erkennt insbesondere eine erste Spalte 34 mit einer fortlaufenden Nummerierung, die den jeweiligen, den Zeitrang des entsprechenden Datenwertes angebenden Kennwert darstellt, sowie mehrere den jeweilige Datenwert kennzeichnende Beschreibungen 35. Von der Server-Datenverarbeitungseinrichtung 4 an die Client-Datenverarbeitungseinrichtung 6a übermittelte (neue) Datenwerte können in der Tabelle 33 dadurch angezeigt werden, dass sie beispielsweise an deren oberes oder unteres Ende angefügt werden. Die übrigen Ereignisse werden entsprechend nach unten oder oben verschoben.

Um nicht unnötig viel Speicherplatz auf der Client-Datenverarbeitungseinrichtung 6a zu verwenden, kann außerdem vorgesehen sein, dass nur eine begrenzte Anzahl von Datenwerten für die Anzeige auf der Client-Datenverarbeitungseinrichtung 6a gespeichert wird. In einem solchen Fall würde bei einem vollständig ausgefüllten Speicherbereich (der beispielsweise für die Anzeige von 30 Datenwerten in der Tabelle 33 ausreicht) für jeden neu hinzukommenden Datenwert jeweils der älteste Datenwert aus der Tabelle 33 und aus dem zugehörigen Speicherbereich gelöscht werden. Die Anzahl der zu speichernden und anzuzeigenden Datenwerte auf der Client-Datenverarbei-tungseinrichtung 6a kann beispielsweise vom Benutzer vorgebbar sein.

Bei der Verwendung einer Server-Farm als Server-Datenverarbeitungseinrichtung 4 ist schließlich zu beachten, dass eine in sich konsistente fortlaufende Nummerierung bzw. Zeitstempelung der Datenwerte auf Seiten der Server-Datenverarbeitungseinrichtung 4 vorgenommen wird. Es dürfen also beispielsweise keine Datenwert-Nummerierungen doppelt vergeben werden, und es muss sichergestellt sein, dass dem jeweils jüngsten Datenwert auch jeweils der Kennwert mit dem jüngsten Zeitrang zugeordnet wird.

## Patentansprüche

1. Verfahren zum Angleichen eines mittels einer Client-Datenverarbeitungseinrichtung (6a) angezeigten Datenbestandes an einen auf einer Server-Datenverarbeitungseinrichtung (4) gespeicherten Quelldatenbestand, bei dem die folgenden Schritte durchgeführt werden:
- Übermitteln eines Vergleichs-Kennwertes (Kᵥ), der den Zeitrang des momentanen Datenbestandes der Client-Datenverarbeitungseinrichtung (6a) angibt, von der Client-Datenverarbeitungseinrichtung (6a) an die Server-Datenverarbeitungseinrichtung (4);
- Ermitteln eines Teils des Quelldatenbestandes der Server-Datenverarbeitungseinrichtung (4), der einen jüngeren Zeitrang aufweist als der durch den Vergleichs-Kennwert (Kᵥ) angegebene Zeitrang des momentanen Datenbestandes der Client-Datenverarbeitungseinrichtung (6a);
- Übermitteln des ermittelten Teils des Quelldatenbestandes an die Client-Datenverarbeitungseinrichtung (6a); und
- Aufnehmen des von der Server-Datenverarbeitungseinrichtung (4) übermittelten Teils des Quelldatenbestandes in den Datenbestand der Client-Datenverarbeitungseinrichtung (6a) unter Bildung eines aktualisierten Datenbestandes der Client-Datenverarbeitungseinrichtung (6a).

2. Verfahren nach Anspruch 1,
**dadurch gekennzeichnet, dass**
- der Vergleichs-Kennwert (Kᵥ) und der ermittelte Teil des Quelldatenbestandes zwischen der Server-Datenverarbeitungseinrichtung (4) und der Client-Datenverarbeitungseinrichtung (6a) über ein Netzwerk (5) übertragen werden.

3. Verfahren nach Anspruch 2,
**dadurch gekennzeichnet, dass**
- als Netzwerk (5) das Internet oder ein Intranet verwendet wird.

4. Verfahren nach Anspruch 3,
**dadurch gekennzeichnet, dass**
- der Datenbestand der Client-Datenverarbeitungseinrichtung (6a) mittels einer auf der Client-Datenverarbeitungseinrichtung (6a) installierten Browsereinrichtung (15) angezeigt wird.

5. Verfahren nach Anspruch 4,
**dadurch gekennzeichnet, dass**
- mittels der Browsereinrichtung (15) ein von der Server-Datenverarbeitungseinrichtung (4) an die Client-Datenver-arbeitungseinrichtung (6a) übertragenes HTML-Dokument (13) angezeigt wird und
- der Datenbestand der Client-Datenverarbeitungseinrichtung (6a) zur Anzeige in dieses HTML-Dokument (13) eingebunden wird.

6. Verfahren nach Anspruch 5,
**dadurch gekennzeichnet, dass**
- von der Browsereinrichtung (15) über eine von dem HTML-Dokument (13) bereitgestellte Software-Schnittstelle (17) der Vergleichs-Kennwert (Kᵥ) an die Server-Datenverarbeitungseinrichtung (4) übermittelt wird und
- mittels der Software-Schnittstelle (17) der von der Server-Datenverarbeitungseinrichtung (4) an die Client-Datenverarbeitungseinrichtung (6a) übertragene Teil des Quelldatenbestandes in den Inhalt des von der Browsereinrichtung (15) angezeigten HTML-Dokuments (13) eingebunden wird.

7. Verfahren nach Anspruch 6,
**dadurch gekennzeichnet, dass**
- zur Übertragung des Vergleichs-Kennwertes (Kᵥ) an die Server-Datenverarbeitungseinrichtung (4) und des ermittelten Teils des Quelldatenbestandes an die Client-Datenverarbeitungseinrichtung (6a) und
- zum Einbinden des aktualisierten Datenbestandes der Client-Datenverarbeitungseinrichtung (6a) in das HTML-Dokument (13) ein Web-Service verwendet wird.

8. Verfahren nach Anspruch 7,
**dadurch gekennzeichnet, dass**
als Web-Service ein WebService Client Behavior verwendet wird.

9. Verfahren nach einem der vorangehenden Ansprüche,
**dadurch gekennzeichnet, dass**
- es in vorgebbaren Zeitabständen wiederholt durchgeführt wird.

10. Verfahren nach einem der vorangehenden Ansprüche,
**dadurch gekennzeichnet, dass**
- von zumindest einem an die Server-Datenverarbeitungseinrichtung (4) angeschlossenen elektrischen Gerät (2a-2e) Datenwerte an die Server-Datenverarbeitungseinrichtung 4 übermittelt werden und
- diese übermittelten Datenwerte auf der Server-Datenver-arbeitungseinrichtung 4 unter Ergänzen des Quelldatenbestandes gespeichert werden.

11. Verfahren nach Anspruch 10,
**dadurch gekennzeichnet, dass**
- jedem übermittelten Datenwert ein seinen Zeitrang angebender Kennwert zugeordnet wird und
- die Datenwerte gemeinsam mit den jeweiligen Kennwerten auf der Server-Datenverarbeitungseinrichtung 4 gespeichert werden.

12. Verfahren nach Anspruch 11,
**dadurch gekennzeichnet, dass**
- zum Ermitteln desjenigen Teils des Quelldatenbestandes mit einem jüngeren Zeitrang als dem Zeitrang des momentanen Datenbestandes der Client-Datenverarbeitungseinrichtung der Vergleichs-Kennwert (Kᵥ) mit den jeweils gemeinsam mit den jeweiligen Datenwerten abgespeicherten Kennwerten verglichen wird und
- der gesuchte Teil des Quelldatenbestandes aus denjenigen Datenwerten gebildet wird, deren Kennwerte einen jüngeren Zeitrang angeben als der Vergleichs-Kennwert (Kᵥ).

13. Verfahren nach einem der Ansprüche 10 bis 12,
**dadurch gekennzeichnet, dass**
- als das zumindest eine an die Server-Datenverarbeitungseinrichtung (4) angeschlossene elektrische Gerät (2a-2e) ein Feldgerät verwendet wird.

14. Verfahren nach Anspruch 13,
**dadurch gekennzeichnet, dass**
- als Feldgerät ein elektrisches Schutz- oder Leitgerät verwendet wird.

15. Verfahren nach einem der vorangehenden Ansprüche,
**dadurch gekennzeichnet, dass**
- als Server-Datenverarbeitungseinrichtung (4) eine Anordnung aus mehreren Server-Rechnern verwendet wird.

## Claims

1. Method for aligning a database displayed using a client data processing device (6a) with a source database stored on a server data processing device (4), in which the following steps are performed:
- a comparison characteristic (Kᵥ), which indicates the time ranking of the present database on the client data processing device (6a), is transmitted from the client data processing device (6a) to the server data processing device (4);
- a portion of the source database on the server data processing device (4), which database has a more recent time ranking than the time ranking of the present database (indicated by the comparison characteristic (Kᵥ)) on the client data processing device (6a), is ascertained;
- the ascertained portion of the source database is transmitted to the client data processing device (6a); and
- that portion of the source database which is transmitted by the server data processing device (4) is incorporated into the database on the client data processing device (6a) to form an updated database on the client data processing device (6a).

2. Method according to Claim 1,
**characterized in that**
- the comparison characteristic (Kᵥ) and the ascertained portion of the source database are transmitted between the server data processing device (4) and the client data processing device (6a) via a network (5).

3. Method according to Claim 2,
**characterized in that**
- the network (5) used is the Internet or an intranet.

4. Method according to Claim 3,
**characterized in that**
- the database on the client data processing device (6a) is displayed using a browser device (15) installed on the client data processing device (6a).

5. Method according to Claim 4,
**characterized in that**
- the browser device (15) is used to display an HTML document (13) transmitted from the server data processing device (4) to the client data processing device (6a), and
- the database on the client data processing device (6a) is linked into this HTML document (13) for display.

6. Method according to Claim 5,
**characterized in that**
- the browser device (15) transmits the comparison characteristic (Kᵥ) to the server data processing device (4) via a software interface (17) provided by the HTML document (13), and
- the software interface (17) is used to link that portion of the source database which is transmitted from the server data processing device (4) to the client data processing device (6a) into the content of the HTML document (13) displayed by the browser device (15).

7. Method according to Claim 6,
**characterized in that**
- the comparison characteristic (Kᵥ) is transmitted to the server data processing device (4) and the ascertained portion of the source database is transmitted to the client data processing device (6a), and
- the updated database on the client data processing device (6a) is linked into the HTML document (13) using a web service.

8. Method according to Claim 7,
**characterized in that**
- the web service used is a WebService Client Behavior.

9. Method according to one of the preceding claims,
**characterized in that**
- it is performed repeatedly at prescribeable intervals of time.

10. Method according to one of the preceding claims,
**characterized in that**
- at least one electrical unit (2a - 2e) connected to the server data processing device (4) transmits data values to the server data processing device (4), and
- these transmitted data values are stored on the server data processing device (4) to complement the source database.

11. Method according to Claim 10,
**characterized in that**
- each transmitted data value is allocated a characteristic indicating its time ranking, and
- the data values together with the respective characteristics are stored on the server data processing device (4).

12. Method according to Claim 11,
**characterized in that**
- that portion of the source database with a more recent time ranking than the time ranking of the present database on the client data processing device is ascertained by comparing the comparison characteristic (Kᵥ) with the characteristics which are respectively stored together with the respective data values, and
- the sought portion of the source database is formed from those data values whose characteristics indicate a more recent time ranking than the comparison characteristic (Kᵥ).

13. Method according to one of Claims 10 to 12,
**characterized in that**
- the at least one electrical unit (2a - 2e) used which is connected to the server data processing device (4) is a field transmitter.

14. Method according to Claim 13,
**characterized in that**
- the field transmitter used is an electrical protective or pilot unit.

15. Method according to one of the preceding claims,
**characterized in that**
the server data processing device (4) used is an arrangement comprising a plurality of server computers.

## Revendications

1. Procédé d'adaptation d'un jeu de données affiché au moyen d'un dispositif de traitement de données client ( 6a ) à un jeu de données d'origine mémorisé sur un dispositif de traitement de données serveur ( 4 ), dans lequel les étapes suivantes sont exécutées :
- transmission d'une valeur caractéristique de comparaison ( Kᵥ ), qui indique le rang temporel du jeu de données actuel du dispositif de traitement de données client ( 6a ), du dispositif de traitement de données client ( 6a ) au dispositif de traitement de données serveur (4);
- détermination d'une partie du jeu de données d'origine du dispositif de traitement de données serveur ( 4 ) qui a un rang temporel plus récent que le rang temporel, indiqué par la valeur caractéristique de comparaison ( Kᵥ ), du jeu de données actuel du dispositif de traitement de données client ( 6a ) ;
- transmission de la partie déterminée du jeu de données d'origine au dispositif de traitement de données client ( 6a ) ; et
- reprise de la partie, transmise par le dispositif de traitement de données serveur ( 4 ), du jeu de données d'origine dans le jeu de données du dispositif de traitement de données client ( 6a ) de manière à former un jeu de données actualisé du dispositif de traitement de données client ( 6a ).

2. Procédé selon la revendication 1,
**caractérisé par le fait que**
- la valeur caractéristique de comparaison ( Kᵥ ) et la partie déterminée du jeu de données d'origine sont transmises entre le dispositif de traitement de données serveur ( 4 ) et le dispositif de traitement de données client ( 6a ) par l'intermédiaire d'un réseau ( 5 ).

3. Procédé selon la revendication 2,
**caractérisé par le fait que**
- l'on utilise comme réseau ( 5 ) l'Internet ou un intranet.

4. Procédé selon la revendication 3,
**caractérisé par le fait que**
- le jeu de données du dispositif de traitement de données client ( 6a ) est affiché au moyen d'un navigateur ( 15 ) installé sur le dispositif de traitement de données client ( 6a ).

5. Procédé selon la revendication 4,
**caractérisé par le fait que**
- un document HTML ( 13 ) transmis du dispositif de traitement de données serveur ( 4 ) au dispositif de traitement de données client ( 6a ) est affiché au moyen du navigateur ( 15 ), et
- le jeu de données du dispositif de traitement de données client ( 6a ) est intégré pour l'affichage dans ce document HTML ( 13 ).

6. Procédé selon la revendication 5,
**caractérisé par le fait que**
- le navigateur ( 15 ) transmet la valeur caractéristique de comparaison ( Kᵥ ) au dispositif de traitement de données serveur ( 4 ) par l'intermédiaire d'une interface logicielle ( 17 ) fournie par le document HTML ( 13 ), et
- au moyen de l'interface logicielle ( 17 ), la partie, transmise du dispositif de traitement de données serveur ( 4 ) au dispositif de traitement de données client ( 6a ), du jeu de données d'origine est intégrée dans le contenu du document HTML ( 13 ) affiché par le navigateur ( 15 ).

7. Procédé selon la revendication 6,
**caractérisé par le fait que**
- pour la transmission de la valeur caractéristique de comparaison ( Kᵥ ) au dispositif de traitement de données serveur ( 4 ) et de la partie déterminée du jeu de données d'origine au dispositif de traitement de données client ( 6a ), et
- pour l'intégration du jeu de données actualisé du dispositif de traitement de données client ( 6a ) dans le document HTML ( 13 ),
on utilise un service web.

8. Procédé selon la revendication 7,
**caractérisé par le fait que**,
comme service web, on utilise un service web appelé Client Behavior.

9. Procédé selon l'une des revendications précédentes,
**caractérisé par le fait que**
- il est exécuté de manière répétée à des intervalles de temps pouvant être prescrits.

10. Procédé selon l'une des revendications précédentes,
**caractérisé par le fait que**
- des valeurs de données sont transmises par au moins un appareil électrique ( 2a à 2e ) raccordé au dispositif de traitement de données serveur ( 4 ) au dispositif de traitement de données serveur ( 4 ), et
- ces valeurs de données transmises sont mémorisées sur le dispositif de traitement de données serveur ( 4 ) de manière à compléter le jeu de données d'origine.

11. Procédé selon la revendication 10,
**caractérisé par le fait que**
- une valeur caractéristique indiquant son rang temporel est associée à chaque valeur de données transmise, et
- les valeurs de données sont mémorisées conjointement avec les valeurs caractéristiques respectives sur le dispositif de traitement de données serveur ( 4 ).

12. Procédé selon la revendication 11,
**caractérisé par le fait que**
- pour la détermination de la partie du jeu de données d'origine ayant un rang temporel plus récent que le rang temporel du jeu de données actuel du dispositif de traitement de données client, on compare la valeur caractéristique de comparaison ( Kᵥ ) aux valeurs caractéristiques mémorisées à chaque fois conjointement avec les valeurs de données respectives, et
- la partie cherchée du jeu de données d'origine est formée à partir des valeurs de données dont les valeurs caractéristiques indiquent un rang temporel plus récent que la valeur caractéristique de comparaison ( Kᵥ ).

13. Procédé selon l'une des revendications 10 à 12,
**caractérisé par le fait que**
- l'on utilise comme le - au moins un - appareil électrique ( 2a à 2e ) raccordé au dispositif de traitement de données serveur ( 4 ) un appareil de terrain.

14. Procédé selon la revendication 13,
**caractérisé par le fait que**
- l'on utilise comme appareil de terrain un appareil électrique de protection ou de commande.

15. Procédé selon l'une des revendications précédentes,
**caractérisé par le fait que**
- l'on utilise comme dispositif de traitement de données serveur ( 4 ) un dispositif constitué de plusieurs ordinateurs serveurs.
